(19) Europäisches Patentamt / European Patent Office / Office européen des brevets

(11) **EP 2 962 278 B1**

(12) **EUROPEAN PATENT SPECIFICATION**

(45) Date of publication and mention of the grant of the patent:
**16.01.2019 Bulletin 2019/03**

(21) Application number: **14712804.5**

(22) Date of filing: **19.02.2014**

(51) Int Cl.:
**G06T 5/00** (2006.01)    **G06T 5/50** (2006.01)
**H04N 5/217** (2011.01)

(86) International application number:
**PCT/US2014/017124**

(87) International publication number:
**WO 2014/133844 (04.09.2014 Gazette 2014/36)**

(54) **MULTI-SPECTRAL IMAGING SYSTEM FOR SHADOW DETECTION AND ATTENUATION**

MULTISPEKTRALES BILDGEBUNGSSYSTEM FÜR SCHATTENERKENNUNG UND -ABSCHWÄCHUNG

SYSTÈME D'IMAGERIE MULTISPECTRALE POUR LA DÉTECTION ET L'ATTÉNUATION DES OMBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2013 US 201313777968**

(43) Date of publication of application:
**06.01.2016 Bulletin 2016/01**

(73) Proprietor: **Qualcomm Incorporated**
**San Diego, CA 92121-1714 (US)**

(72) Inventors:
• **FENG, Chen**
  **San Diego, California 92121-1714 (US)**
• **ZHANG, Xiaopeng**
  **San Diego, California 92121-1714 (US)**
• **SHEN, Liang**
  **San Diego, California 92121-1714 (US)**
• **ZHUO, Shaojie**
  **San Diego, California 92121-1714 (US)**

(74) Representative: **Howe, Steven**
**Reddie & Grose LLP**
**The White Chapel Building**
**10 Whitechapel High Street**
**London E1 8QS (GB)**

(56) References cited:
**US-B2- 6 954 549**

• **SALAMATI N ET AL: "Removing shadows from images using color and near-infrared", IMAGE PROCESSING (ICIP), 2011 18TH IEEE INTERNATIONAL CONFERENCE ON, IEEE, 11 September 2011 (2011-09-11), pages 1713-1716, XP032079940, DOI: 10.1109/ICIP.2011.6115788 ISBN: 978-1-4577-1304-0**
• **Clement Fredembach ET AL: "Automatic and accurate shadow detection from (potentially) a single image using near-infrared information", EPFL Technical Report 165527, 1 January 2010 (2010-01-01), pages 1-12, XP055119629, Retrieved from the Internet: URL:http://infoscience.epfl.ch/record/1655 27/files/nirshadows.pdf [retrieved on 2014-05-22]**

**Description**

BACKGROUND OF THE INVENTION

Field of the Invention

The present disclosure relates to systems and methods for shadow detection and attenuation. In particular, the disclosure relates to systems and methods for detecting and attenuating shadows on human skin or other living objects using multi-spectral imaging techniques.

Description of the Related Art

Imaging systems enable users to take photographs of a variety of different objects and subjects in many different lighting conditions. However, when photographs are captured of objects in daylight or under bring indoor lights, shadows may be cast over the object to be imaged. For example, when a user takes photographs of another person outside in daylight, shadows may be cast on the person's face by intervening objects (*e.g.,* by a tree or structure). These shadows may degrade image quality and obscure rich details of the person's skin that may otherwise be illuminated in the absence of shadows. US6954549B2 discloses shadow attenuation by making use of multispectral information in the visible range. Kanzawa et al. (2011), "Human skin detection by visible and near-infrared imaging" discloses human skin detection by use of visible and near-infrared imaging. Fredembach et al. (2010), "Automatic and accurate shadow detection from (potentially) a single image using near-infrared information" discloses shadow detection by use of visible and near-infrared data.

Accordingly, improved systems and methods for detecting and attenuating shadows cast on objects are desirable.

SUMMARY

In one implementation, a computer-implemented method for attenuating shadows in an image is disclosed. The method can comprise processing multispectral image data that includes a living subject to detect live-subject portions of the multispectral image data. Further, the method can include identifying shadows in the detected live-subject portions of the multispectral image data. The identified shadows can be attenuated in at least part of the multispectral image data.

In another implementation, an imaging system for attenuating shadows in a visible image is disclosed. The system can include a live-subject verification module programmed to process multispectral image data that includes a living subject to detect live-subject portions of the multispectral image data. The system can also include a shadow identification module programmed to identify shadows in the detected live-subject portions of the multispectral image data. In addition, the system can include a shadow attenuation module programmed to attenuate the identified shadows in at least part of the multispectral image data.

In yet another implementation, an imaging system is disclosed. The imaging system can include means for processing multispectral image data that includes a living subject to detect live-subject portions of the multispectral image data. The system can also include means for identifying shadows in the detected live-subject portions of the multispectral image data. Furthermore, the system can include means for attenuating the identified shadows in at least part of the multispectral image data.

In another implementation, a non-transitory computer-readable medium is disclosed. The non-transitory computer-readable medium can have stored thereon code that when executed performs a method comprising processing multispectral image data that includes a living subject to detect live-subject portions of the multispectral image data. The method can include identifying shadows in the detected live-subject portions of the multispectral image data. Further, the method can include attenuating the identified shadows in at least part of the multispectral image data.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

BRIEF DESCRIPTION OF THE DRAWINGS

Figure 1A is a schematic drawing of a user capturing an image of a live subject in daylight using a multispectral imaging system.

Figure 1B is a magnified view of the diagram shown in Figure 1A that illustrates shadow and non-shadow regions in an image captured by the multispectral imaging system.

Figure 2 is a schematic diagram of a shadow attenuation system, according to one embodiment.

Figure 3 is a flowchart illustrating a method for attenuating shadows in a visible light image, according to one implementation.

Figure 4 is a flowchart illustrating a method for detecting live-subject portions of the visible and NIR images, according to some implementations.

Figure 5 is a flowchart illustrating a method for identifying shadows in detected live-subject portions, according to some implementations.

Figure 6 is a histogram of the measured intensity of non-shadow and shadow pixels.

Figure 7 is a flowchart illustrating a method for attenuating the identified shadows, according to some implementations.

Figures 8A-1 through 8E are example images at different stages of a shadow attenuation method, according to one implementation.

DETAILED DESCRIPTION

System Overview

Implementations disclosed herein provide systems, methods, and apparatus for identifying and attenuating shadows cast on a live subject, such as on skin of a live human face or another portion of a human subject's body. In particular, the disclosed implementations can identify and attenuate shadows on live human skin using a multispectral imaging system. The multispectral imaging system may include separate visible light and near infrared (NIR) sensors, or a single sensor capable of capturing both visible and NIR images. In various implementations, the multispectral imaging system can be configured to capture both a visible light image and a NIR image of a live subject. For example, the multispectral imaging system can be configured to capture visible and NIR images of a human face during daylight conditions. As explained herein, during daylight operation, shadows may be cast over the human face, which can undesirably interfere with the quality of images taken of the face. For example, the shadows can cast a dark region over the face, which may conceal structural features of the face and/or rich details of the subject's skin. In addition to obscuring details of facial features, shadows cast on a person to be imaged can also obscure details of a live subject's skin in other parts of a person's body.

In various implementations disclosed herein, shadows cast on portions of a live subject (*e.g.,* shadows cast on a human face) can automatically be detected and attenuated. Such automatic detection and attenuation can advantageously improve image quality by removing the dark regions formed by the shadow and by enabling rich details of a person's skin or facial features to be imaged. Without being limited by theory, rich details of the subject's skin can be imaged even in shadow because of the unique reflective properties of human skin when illuminated by NIR light. Thus, the disclosed multispectral imaging techniques, which include imaging at visible and NIR wavelengths, can enable the automatic detection and attenuation of shadows on a live subject's skin, while preserving the natural look of human skin.

For example, in some arrangements, a subject can be imaged using a multispectral imaging system configured to capture visible light having a wavelength in a range of about 400 nm to about 750 nm and to also capture NIR light having a wavelength in a range of about 750 nm to about 1100 nm. In implementations where a human face is imaged, automatic face detection techniques can be employed to detect the human face. Further, live-subject portions of the visible and NIR images can be detected. For example, when a human face is imaged, live-skin portions or pixels of the face may be identified by the systems and methods disclosed herein. The multispectral imaging system can detect the live-skin portions of a human subject based at least in part on the unique reflectance properties of human skin when illuminated by light at NIR wavelengths.

Shadows that are cast over the skin can therefore be identified and attenuated. The resulting visible light image may be substantially free of the artifacts and other undesirable effects induced by shadows cast over the live-subject portions of the image. In some implementations, the methods described herein may be performed substantially automatically by the disclosed systems such that minimal or no user interaction is needed. Such automatic detection and attenuation of shadows cast on living subjects can allow users to capture images on various imaging systems and automatically detect and attenuate shadows in an efficient and simple manner.

Furthermore, although some of the implementations disclosed herein relate to detecting and attenuating shadows cast on a human face or on live-skin portions of a human subject, it should be appreciated that the principles and details disclosed herein may also be applicable to other types of materials. For example, NIR light may also have unique response characteristics when a piece of vegetation, such as plant matter, is illuminated with NIR light and imaged with a NIR sensor. Indeed, although many of the disclosed implementations result from calibrated and/or theoretical optical responses of human skin when illuminated by various wavelengths of light (e.g., visible and NIR wavelengths), skilled artisans will appreciate that it may also be possible to calibrate and/or calculate the optical responses of other materials such as living animal skin, etc. when the other materials are illuminated by various wavelengths of light.

In the following description, specific details are given to provide a thorough understanding of the examples. However, it will be understood by one of ordinary skill in the art that the examples may be practiced without these specific details. For example, electrical components/devices may be shown in block diagrams in order not to obscure the examples in unnecessary detail. In other instances, such components, other structures and techniques may be shown in detail to further explain the examples.

It is also noted that the examples may be described as a process, which is depicted as a flowchart, a flow diagram, a finite state diagram, a structure diagram, or a block diagram. Although a flowchart may describe the operations as a sequential process, many of the operations can be performed in parallel, or concurrently, and the process can be repeated. In addition, the order of the operations may be rearranged. A process is terminated when its operations are completed. A process may correspond to a method, a function, a procedure, a subroutine, a subprogram, etc. When a process corresponds to a software function, its termination may correspond to a return of the function to the calling function or the main function, or a similar completion of a subroutine or like functionality.

Those of skill in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

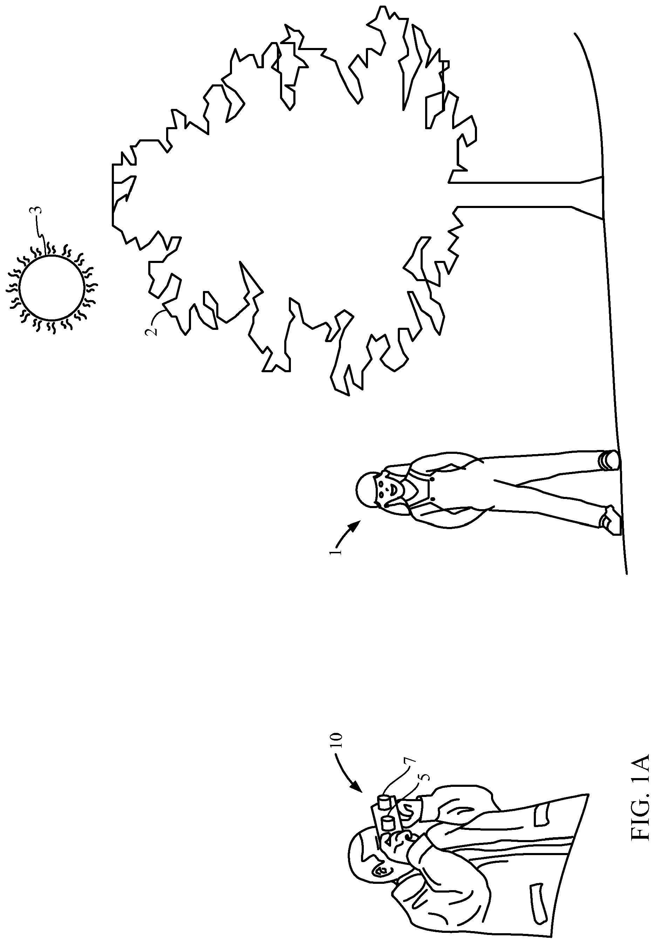

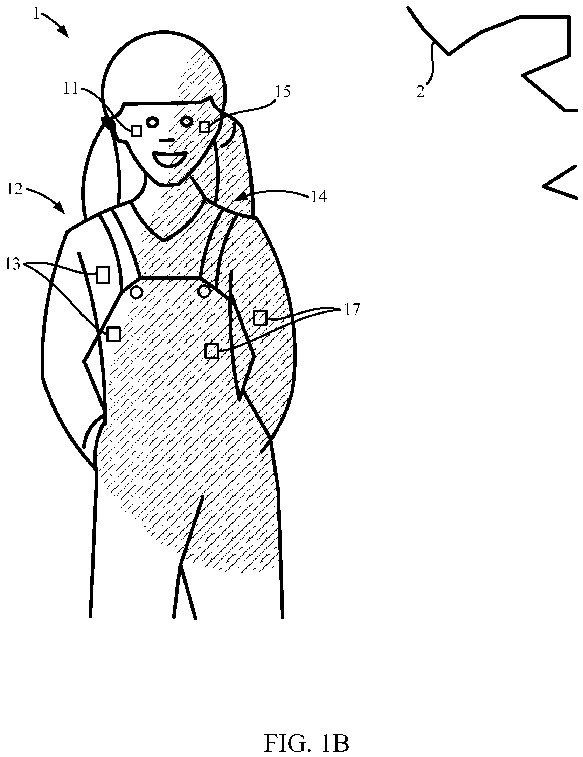

Figure 1A is a schematic drawing of a user capturing an image of a live subject 1 in daylight using a shadow attenuation system 10. The illustrated shadow attenuation system 10 includes a visible light sensor 5 and a NIR sensor 7. In Figure 1A, the live subject 1 is standing near a tree 2. Light emitted from the sun 3 (or other light source) may be partially obscured by the tree 2, which can cast a shadow over portions of the live subject 1 as shown in more detail in Figure 1B.

Figure 1B is a magnified view of the diagram shown in Figure 1A that shows more details of the live subject 1. Because the tree 2 is positioned between the sun 3 and the live subject 1, a shadow region 14 is cast over a portion of the imaged live subject 1. Light that is not obscured by the tree 2 may be imaged in a non-shadowed, full illumination, region 12. The portions of the subject 1 captured in the shadow region 14 would appear darker in a captured image than the portions of the subject 1 captured in the non-shadow region 12. In addition, rich details of the subject's skin 15 captured in the shadow region 14 may be lost or degraded due to the shadow cast over the skin 15 of the subject 1.

The non-shadow region 12 can include non-shadow, live-skin portions 11 and non-shadow, non-live skin portions 13. The non-shadow, live-skin portions 11 can be one or more pixels of the image that correspond to the skin of the live subject 1 that are not obscured by the shadow. The non-shadow, non-live skin portions 13 can be one or more pixels of the image that correspond to non-living portions of the live subject, such as clothes or hair, or of a non-living object in the image, that are not obscured by the shadow in the image.

Similarly, the shadow region 14 can include shadow, live-skin portions 15 and shadow, non-live-skin portions 17. The shadow, non-live skin portions 17 can include one or more pixels that correspond to non-living portions in the image, such as the clothes or hair of the live subject 1, or other non-living or non-skin objects. The shadow, live-skin portions 15 can include one or more pixels of the image that correspond to portions of the skin of the live subject 1 that are at least partially obscured by the cast shadow, such as portions that image the face or neck of the live subject 1. As described herein, the systems and methods described below attenuate the shadows imaged in the shadow, live-skin portions 15 and to improve the quality of the skin captured in the image. The systems and methods disclosed herein can advantageously reduce the effects of the cast shadow in the image such that the image includes the rich details and maintains the natural look of the skin.

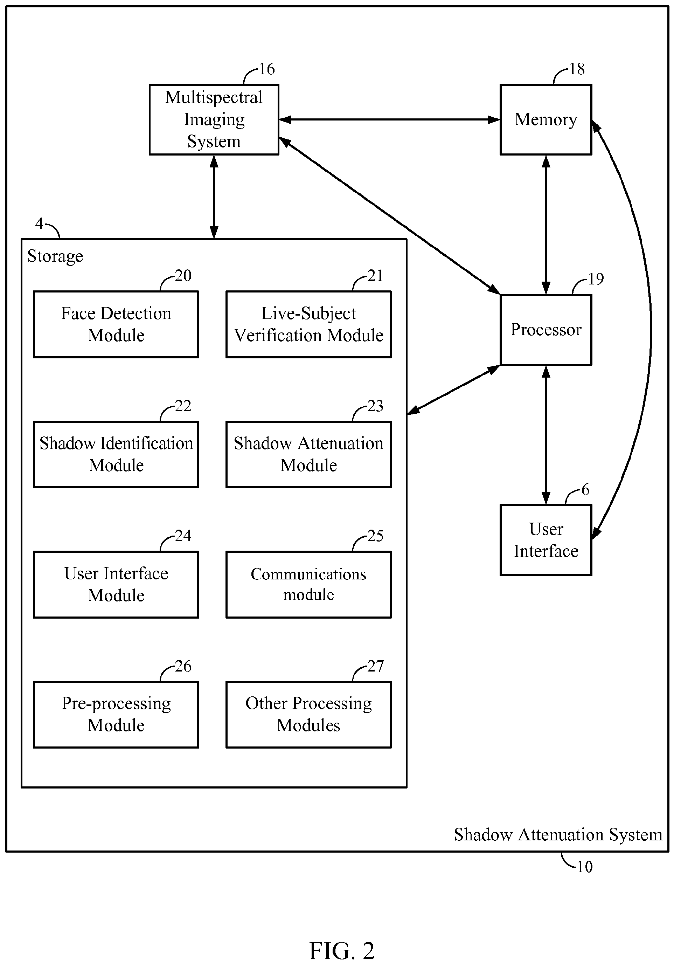

Turning to Figure 2, a schematic diagram of a shadow attenuation system 10 is disclosed, such as the shadow attenuation system 10 shown in Figure 1A above. The shadow attenuation system 10 can include a multispectral imaging system 16 in some arrangements. As explained herein, the multispectral imaging system 16 can include a visible light sensor 5 and a NIR sensor 7. For example, the visible light sensor 5 can be a CCD/CMOS capable of detecting visible light at least in the range between about 400 nm and about 700 nm. The multispectral imaging system 16 can further include a second sensor, such as a CCD/CMOS that is capable of detecting NIR light in the range between about 700 nm and about 1100 nm. In some implementations, the wavelength ranges for the visible and NIR sensors can overlap or can even be substantially the same. Skilled artisans would understand that other types of sensors are possible, and other wavelength ranges are possible. In some implementations, imaging filters, such as a NIR pass filter, can be used on a suitable CCD/CMOS to detect only the NIR data. Skilled artisans would understand that various other sensors or combinations thereof can be used to capture visible and NIR image data. In some arrangements, a single sensor can be used to capture both visible and NIR wavelengths.

In other implementations, the multispectral imaging system 16 can be configured to include a single multispectral imaging sensor that can sense a broad band of wavelengths, including at least visible light wavelengths and near infrared (NIR) light wavelengths. The multispectral imaging sensor can be configured to detect light at wavelengths between about 400 nm and about 1100 nm (e.g., between about 400 nm and about 700 nm for visible light and between about 700 nm and about 1100 nm for NIR light, in various implementations). Of course, the imaging sensor can also be configured to detect a much broader range of wavelengths as well. In some implementations, a charge-coupled device (CCD) can be used as the multispectral imaging sensor. In other implementations, a CMOS imaging sensor can be used as the multispectral imaging sensor.

The shadow attenuation system 10 can include a memory 18 and a processor 19. The memory 18 and processor 19 are configured to electrically communicate with each other and with the multispectral imaging sensor 16. The shadow attenuation system 10 also has a storage device 4 that is capable of storing various software modules that can be executed by the processor 19. In some implementations, the processor 19 can receive and transmit data to and from the multispectral imaging system 16, and can operate on that data by executing computer-implemented instructions stored in one or more software modules in the storage device 4.

The storage device 4 can be any suitable computer-readable storage medium, such as a non-transitory storage medium. The storage device 4 can comprise any number of software modules. For example, the storage device 4 can include a face detection module 20. The face detection module 20 can include software that can detect a human face in an image. In some implementations, the face detection module 20 can use known techniques to detect and verify the geometry of a captured face in an image. In some implementations, the face detection module 20 can be configured to detect the outline of a face, while in other implementations, the face detection module 20 can detect the general region in which a face is located (*e.g.,* a face located within a particular square or rectangular region). In one implementation, for example, the OKAO Vision Face Sensing Technology, manufactured by OMRON Corporation of Kyoto, Japan, can be used by the face detection module 20. Other implementations of the face detection module 20 are possible and thus embodiments are not limited to any particular method for detecting faces in an image.

A live-subject verification module 21 can also be stored in the storage device 4. As will be described in more detail herein, the live-subject verification module 21 can include computer-implemented instructions for identifying live-subject portions in an image. For example, the live-subject verification module 21 can include instructions for identifying live human skin, *e.g.,* live-skin portions, of an image that includes the live subject 1. As explained herein, the live-subject verification module 21 can be programmed to calculate a binary skin map, which can identify pixels as live- or non-live-skin pixels or portions. Further, the live-subject verification module 21 can be programmed to smooth the boundaries of the identified skin calculated in the binary skin map. The live-subject verification module 21 can be configured to identify other types of living subjects or objects, such as vegetation.

Further, the storage device 4 can include a shadow identification module 22. The shadow identification module 22 can include computer-implemented instructions for identifying shadow region(s) in an image, such as the shadow region 14 of Figure 1B. In some embodiments, the shadow identification module 22 can be programmed to distinguish shadow regions from dark, non-shadow objects in the captured image. In conjunction with the live-subject verification module 21, the shadow identification module 22 can be programmed to identify and distinguish shadow, live-skin portions 15 from shadow, non-live-skin portions 17. For example, the shadow identification module 22 can utilize skin's unique reflectance properties when illuminated with NIR and visible light to derive a shadow map of the captured image.

The storage device 4 can also comprise a shadow attenuation module 23. The shadow attenuation module 23 can include computer-implemented instructions for attenuating the identified shadows in the image. For example, as explained in more detail herein, the shadow attenuation module 23 can be programmed to generate a weight map indicating the amount of luminance shift for each pixel. In some implementations, the luminance value of each pixel can be adjusted to attenuate the shadows, *e.g.,* to reduce the dark regions captured in the shadow regions 14 of the image. In addition, in some arrangements, the luminance of the pixels can be adjusted in blocks of multiple pixels by the shadow attenuation module 23.

A communications module 25 and a pre-processing module 26 can be stored on the storage device 4. The communications module 25 can comprise computer-implemented instructions that manage the flow of data between the components of the shadow attenuation system 10. The pre-processing module 26 can be configured to pre-process data, such as image data received from the multispectral imaging system 16, before other operations are performed on the data. The storage device 4 can optionally include a user interface module 24. The user interface module 24 can comprise instructions for implementing an optional user interface 6. For example, the user interface 6 can include a display and/or one or more buttons to actuate the multispectral imaging system 16. In some arrangements, the user interface 6 can include features that allow the user to select a shadow attenuation mode, in which the methods disclosed herein may be used to detect and attenuate shadows cast on the live subject 1. Other user interface features, including a graphical user interface (GUI), can be controlled or implemented by instructions stored in the user interface module 24. Also, as shown in Figure 2, other processing modules 27 can be stored in the storage device 4 as desired for implementing various other functionalities for the system 10.

The shadow attenuation system 10 can also include the optional user interface 6. The user interface 6 can enable a user of the system 10 to interact with the system 10 and to effectively use the various modules to detect and attenuate shadows and/or to activate the multispectral imaging system 16. For example, the user interface 6 can include one or more displays to display the captured image and/or other data. The display(s) can also be configured to display a graphical user interface (GUI) to further enhance the usability of the system 10. In some implementations, the user interface 6 can include various peripheral devices, including, *e.g.,* a keyboard, a mouse, a printer, and other input/output devices.

The shadow attenuation system 10 can be implemented on a mobile device, including a mobile phone or smartphone, a tablet computer, a laptop computer, a digital camera, or the like. By integrating the multispectral imaging system 16, the memory 18, the processor 19, the storage 4, and the optional user interface 6 on a mobile device, the shadow attenuation system 10 can advantageously be used without requiring the system to remain in a fixed location. In other implementations, however, the shadow attenuation system 10 can comprise a desktop computer, server, computer workstation, or other type of computing device. The shadow attenuation system 10 can be integrated with the other computer hardware, or the shadow attenuation system 10 can be separate from the computing device, for example as a separate camera or cameras.

Shadow Attenuation Overview

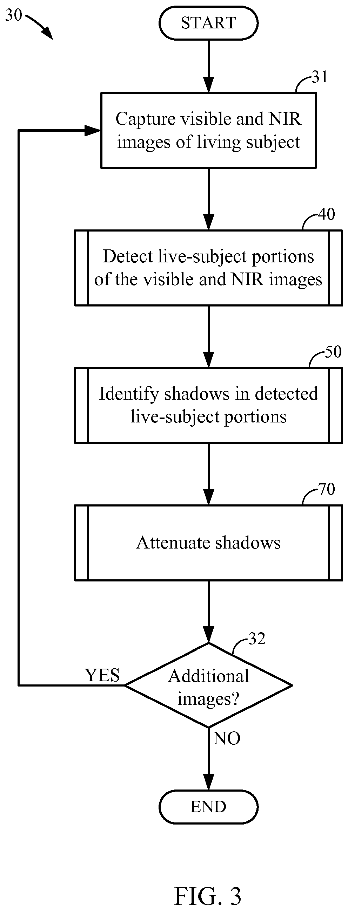

Figure 3 is a flowchart illustrating a method 30 for attenuating shadows in a visible light image. The method 30 begins in a block 31, in which visible and NIR images of a living subject are captured. For instance, image data can be captured by the multispectral imaging system 16 over a wavelength range between about 400 nm and about 1100 nm (*e.g.,* between about 400 nm and about 700 nm for visible light and between about 700 nm and about 1100 nm for NIR light, in various implementations). In some arrangements, the visible and NIR images can be captured by separate visible light and NIR sensors. In some implementations, the visible light and NIR images can be initially roughly aligned because the visible light and NIR imaging sensors may be spaced closely together. Thus, a pixel in the visible light image can correspond to a pixel in the NIR image, such that pixels that are aligned between the visible and NIR images can be referred to as aligned pixel pairs. The NIR and visible images can be further aligned based on techniques disclosed in U.S. Patent Application No. 13/663,897, filed October 30, 2012, entitled "MULTISPECTRAL IMAGING SYSTEM." In other arrangements, visible and NIR image data can be captured by a single sensor that can detect visible and NIR image data.

The method 30 moves to a block 40 to detect live-subject portions of the visible and NIR images. In the embodiments disclosed herein, the detected live-subject portions comprise human skin on a human face, *e.g.,* live-skin portions or pixels. In addition, the detected live-subject portions can comprise human skin on other parts of the subject's body. The detected live-subject portions can comprise other types of living subjects or objects, such as vegetation, etc.

In some arrangements, a human face can be detected in the captured image. Any suitable method of face detection can be used to detect the face in the image. For example, in some arrangements, the imaged faces in the visible and NIR images may be roughly aligned because the visible light sensor 5 and the NIR sensor 7 can be spaced closely together and/or by using other alignment methods as explained above. As explained in more detail below, the alignment of faces in the visible and NIR images may allow the system to calculate color-to-NIR pixel ratios on a pixel-by-pixel basis. Further, the face detection module 20 can detect details about the geometry of the captured face. Alternatively, the face detection module 20 can detect the general region in which a face lies, such as within a particular box in an image. In addition, in various implementations, one or more regions-of-interest (ROI) may be defined on the face. For example, a weighted face mask can be generated based on the shape of the face and the location of the eyes and/or the mouth from the face detection module 20.

Live-skin portions of the imaged subject can be detected utilizing the difference of human skin's reflectance under visible and NIR illumination. For example, in block 40, a binary skin map can be calculated based on the difference between the pixel value of a NIR image pixel and the pixel value of the green channel of a corresponding visible image pixel in an aligned pixel pair (*e.g.,* a pixel in the visible light image that is at roughly the same location as the pixel in the NIR image, such that the visible and NIR pixels are aligned). The binary skin map may also be based on the difference between the pixel values of the red and green channels of the visible image pixel. The boundaries of the detected skin can be smoothed in various ways, such as smoothing the skin boundaries using sigmoid functions, as explained below.

The method 30 then moves to a block 50, in which shadows are identified in the detected live-subject portions. For example, the method 30 can identify shadows in the detected live-skin portions on the face of a live subject. In some implementations, a global dark map is generated, in which shadow candidates are identified by analyzing portions of the visible and NIR images that are generally darker than other portions. Because dark portions of the image can correspond to shadow regions, or merely to dark objects in non-shadow regions, the method 30 can distinguish shadow, live-skin regions from other dark objects based on a ratio of the visible light intensity to the NIR light intensity for each pixel pair. The visible-to-NIR ratio can take advantage of the unique reflectance properties of human skin when illuminated by NIR light.

A shadow map can be generated to identify live-skin pixels that are located within shadow regions of the image. Indeed, a shadow pixel can be differentiated from a non-shadow pixel in the live-skin portions based on the histogram of the shadow map. In various arrangements, a shadow edge can be calculated using edge detection algorithms, and the shadow boundary can be smoothed by finding the shadow penumbra and adjusting the pixel values based on the penumbra. In addition, shadow and non-shadow anchor pixels can be calculated. The shadow and non-shadow anchor pixels can represent regions of the image that originate from the same human skin. The anchor pixels can be calculated based on the intensity distribution of identified shadow and non-shadow pixels.

Turning to a block 70, the identified shadows in the live-subject portions can be attenuated. A pixel-wise method can be used to adjust the luminance of each pixel in the visible light image to attenuate the shadows. By shifting the luminance of each pixel, the dark regions generated by the cast shadow can be removed. In some implementations, a block-wise method can be used to adjust the luminance of pixels in a pre-defined block. The pixel- and block-wise attenuations can be blended. The resulting visible light image with attenuated shadows can include the rich details of human skin and geometric features of the face or other live-subject portion of the image.

The method 30 moves to a decision block 32 to determine whether additional multispectral images are to be captured. If a decision is made that additional images are to be captured, the method 30 returns to the block 31 to capture additional visible and NIR images of the living subject. If a decision is made that no additional images are to be captured, the method 30 ends.

Detection of Live-Subject Portions

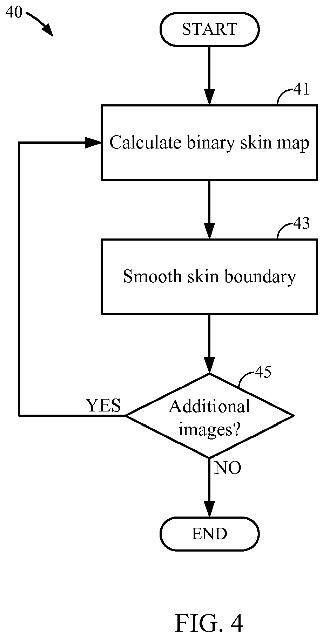

Figure 4 is a flowchart illustrating a method 40 for detecting live-subject portions of the visible and NIR images, according to some implementations. The method 40 begins in a block 41 to calculate a binary skin map. The difference of human skin reflectance under visible and NIR illumination can enable the detection of live-skin portions of a living subject. For example, a first normalized reflectance difference, $r_1$, can be calculated based on the pixel value of the green channel of a visible image pixel $i$ and the pixel value of the corresponding pixel $i$ in the NIR image:

$$r_1 = \frac{\rho_i(\lambda_{NIR}) - \rho_i(\lambda_g)}{\rho_i(\lambda_{NIR}) + \rho_i(\lambda_g)},$$

where $\rho$ represents the normalized intensity at pixel $i$ for imaging channels NIR, green, red, blue, etc.

A second normalized reflectance difference, $r_2$, can be calculated based on the pixel values of the red and green channels of the visible image pixel $i$:

$$r_2 = \frac{\rho_i(\lambda_g) - \rho_i(\lambda_r)}{\rho_i(\lambda_g) + \rho_i(\lambda_r)}$$

Thresholds of the histograms of $r_1$ and $r_2$ can enable estimation of threshold values $t_{n1}$, $t_{n2}$, $t_{r1}$, and $t_{r2}$. For example, a particular pixel $i$ can be identified as a live-skin pixel if:

$$t_{n1} < r_1 < t_{n2} \text{ and } t_{r1} < r_2 < t_{r2}.$$

The resulting binary skin map can be used to indicate which portions of the image are live-skin pixels. Additional details of various techniques for detecting live-subject portions, *e.g.,* live-skin portions, can be found in U.S. Patent Application No. 13/533,706, filed June 26, 2012, and entitled "SYSTEMS AND METHOD FOR FACIAL VERIFICATION."

The method 40 moves to a block 43, in which the boundary of the skin is smoothed. While the binary skin map calculated in block 41 can distinguish live- and non-live skin portions of the image, the resulting boundary may be choppy or otherwise unsmooth. To smooth the boundary between live- and non-live skin portions, a smoothed skin map, $S$, can be calculated by:

$$S = N(w_1.w_2.w_3.w_4),$$

where $N$ represents the min-max normalization function. The sigmoid functions $w_1$, $w_2$, $w_3$, and $w_4$ can be calculated based on the differences between the normalized reflectance differences and their associated thresholds. For example, the sigmoid functions can be calculated by:

$$w_1 = \frac{1}{1 + e^{a(r_1 - t_{n2})}};$$

$$w_2 = \frac{1}{1 + e^{-a(r_1 - t_{n1})}};$$

$$w_3 = \frac{1}{1 + e^{a(r_2 - t_{r2})}};$$

and

$$w_4 = \frac{1}{1 + e^{-a(r_2 - t_{r1})}},$$

where $a$ is a parameter that controls the rate of the sigmoid functions w.

The method 40 moves to a decision block 45, in which a decision is made whether additional images are to be processed to identify live-subject portions. If a decision is made that there are additional images, the method 40 returns to the block 41 to calculate the binary skin map. If a decision is made that there are no additional images, the method 40 ends. It should be appreciated that, while the method 40 is based on pixel-wise differences, exact alignment of the visible and NIR images is not required. Indeed, facial skin is typically rather smooth and has a constant color response across the face. Thus, the method 40 can accurately identify live-skin portions of the image even when the visible and NIR images are roughly aligned, *e.g.,* aligned based on a detected face. The identified live-skin portions can be used to detect shadows, as explained in more detail herein.

Identification of Shadows

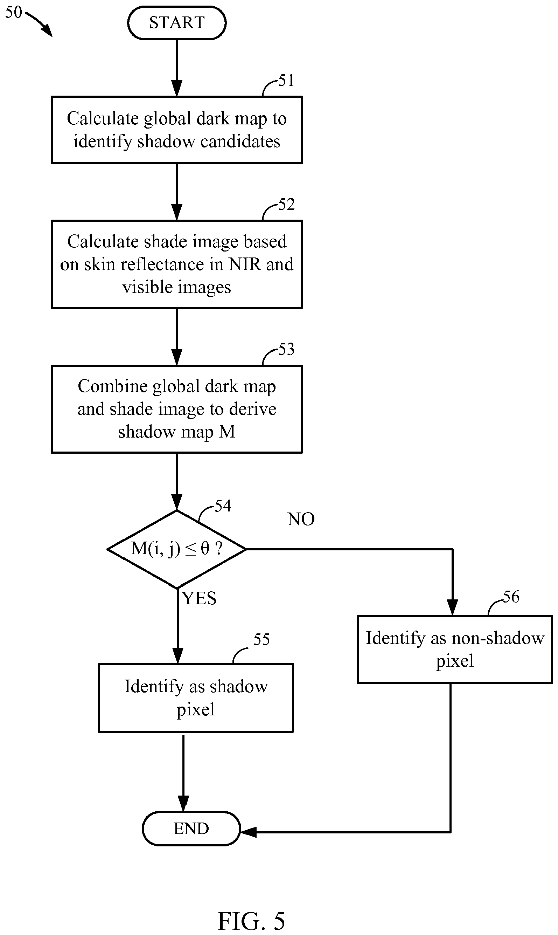

Figure 5 is a flowchart illustrating a method 50 for identifying shadows in detected live-subject portions, according to some implementations. The method 50 can begin in a block 51 to calculate a global dark map $D$ to identify shadow candidate pixels. The dark map $D$ identifies pixels in both the NIR and visible images that are dark, *e.g.,* those pixels that have a low measured intensity value in both images. Because the dark map $D$ identifies all pixels in the NIR and visible images that are dark, the dark map $D$ can include pixels representing objects that are in shadow regions (*e.g.,* objects that are dark in both images due to the cast shadow) as well as pixels that merely represent dark objects (*e.g.,* black or other dark-colored objects). In some implementations, the global dark map $D$ can be calculated as

$$D = D_{vis} * D_{NIR},$$

where

$$D_{vis} = 1 - \frac{\rho(\lambda_r) + \rho(\lambda_g) + \rho(\lambda_b)}{3}$$

and

$$D_{NIR} = 1 - \rho(\lambda_{NIR}).$$

Thus, large values in the dark map $D$ can represent shadow candidate pixels, *e.g.,* pixels that are generally dark in both the visible and NIR images. However, the dark map $D$ alone may not distinguish between dark shadow regions and dark objects (whether in or out of a shadow region).

The method 50 moves to a block 52 to calculate a shade image $F$ based on skin reflectance in the NIR and visible images. The shade image $F$ can help to distinguish shadow, live-skin portions from non-shadow, live-skin portions by outlining the shadow regions with non-shadow dark objects. The binary skin map can be used to filter the live-skin portions from the non-live skin portions. It should be appreciated that daylight (*e.g.,* direct sunlight) emits more energy at visible wavelengths than at NIR wavelengths. However, the difference in illumination between visible and NIR light in the shade, *e.g.,* areas that are only exposed under sky light rather than direct daylight, is generally negligible compared to the difference between the reflectance of skin illuminated by visible light and the reflectance of skin illuminated by NIR light. Thus, the ratio of visible light to NIR light can be used to distinguish shadow regions from non-shadow dark objects for regions identified as live-skin portions.

For example, in block 52, the shade image *F* can be calculated based on a ratio of the color-to-NIR pixel values in pixel pairs of the NIR and visible images (*e.g.,* pixels in the NIR image that correspond to pixels in the visible image). For each pixel pair in the NIR and visible images, a pixel ratio $F_k$ can be calculated for a channel *k,* where the channel *k* corresponds to the red, green or blue image data when a RGB visible light sensor is used. The pixel ratio $F_k$ can be defined as

$$F_k = \frac{\rho(\lambda_k)}{\rho(\lambda_{NIR})}; k = \{r, g, b\}.$$

As mentioned above, daylight (*e.g.,* direct sunlight) emits more energy in the visible band than in the NIR band, so it should be appreciated that non-shadow pixels may have a relatively larger $F_k$ than shadow pixels, for live-skin portions of the image. Thus,

$$F_k^{shadow} < F_k^{non-shadow} < 1.$$

For human skin, the shade image *F* can be calculated based on the pixel ratios *F* by

$$F = 1 - \frac{1}{t} \min\left(\max_k (F_k), t\right).$$

In the calculated shade image *F,* large pixel values in live-skin portions may represent true shadow pixels, *e.g.,* pixels located within shadow regions on the identified skin. Thus, the pixel ratio $F_k$ can be used to generate the shade image *F* to outline actual shadow regions compared to dark objects. Skin's unique reflectance properties under visible and NIR illumination can enable the disclosed systems to detect shadows on live-skin portions of an image.

Moving to a block 53, the global dark map *D* (representing shadow candidates) can be combined with the calculated shade image *F* to derive a shadow map *M.* The shadow map *M* may be calculated by

$$M = 1 - D.*F.$$

In the calculated shadow map *M*, small pixel values in the live-skin portions have a high probability of being live-skin, shadow pixels. To classify a region as a shadow or non-shadow region in the visible light image, the calculated shadow map *M* can be binarised. In particular, the histogram of *M* can be computed for live-skin pixels. As above, the binary skin map can be used to select the pixels that correspond to live human skin and to exclude non-live-skin portions.

The method 50 moves to a decision block 54 to compare the value of the shadow map *M* for a pixel *p(i,j)* with a threshold value $\theta$. In the computed histogram of *M,* the threshold $\theta$ can correspond to the first valley of the histogram of *M,* which generally represents the pixel value below which there is a high probability that the pixel is within a shadow region. Thus, whether a particular pixel *p(i,j)* is a live-skin, shadow pixel can be given by

$$p(i, j) = \begin{cases} shadow\_pixel & if\,(M(i, j) \le \theta \\ non-shadow\_pixel & otherwise \end{cases}.$$

If a decision is made in block 54 that the value of the dark map *M(i,j)* for a pixel *p(i,j)* is less than or equal to the threshold $\theta$, then the method moves to a block 55 to identify the pixel *p(i,j)* as a shadow pixel within the live-skin portion of the image. If a decision is made that the value of the dark map *M(i,j)* for a pixel *p(i,j)* is not less than or equal to the threshold $\theta$, the the method 50 moves to a block 56 to identify the pixel *p(i,j)* as a non-shadow pixel. Upon identifying the pixel as a shadow or non-shadow pixel, the method 50 ends.

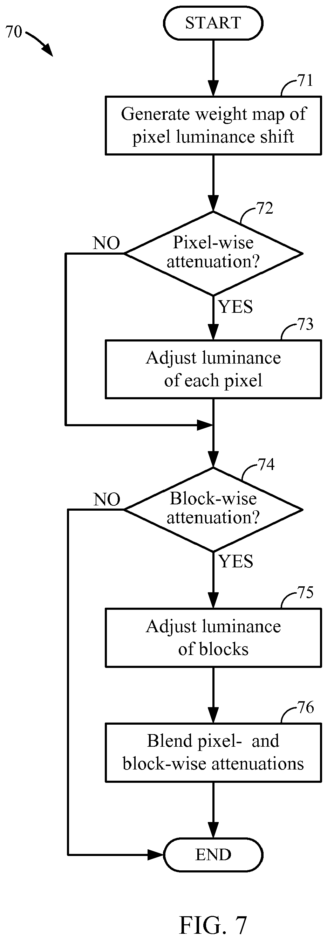

In some arrangements, the boundary of the shadow can be estimated using the shadow map *M* by implementing a standard edge-detection algorithm. Furthermore, the shadow boundary can be smoothed by locating the penumbra region across the cast shadow boundary. By locating the penumbra region, the accuracy of the shadow attenuation method described below with respect to Figure 7 can be improved. For example, pixels that are identified as edge or penumbra pixels can be used with a Markov Random Field (MRF) technique to smooth the shadow boundaries.

Furthermore, to improve the shadow attenuation technique explained below with respect to Figure 7, shadow and non-shadow anchor pixels can be selected. The intensity distribution of shadow pixels and non-shadow pixels on human skin in the same image may be highly correlated. Indeed, the shadow and non-shadow anchor pixels can represent pixels that are highly likely to have originated from the same human skin in the image. For example, in some arrangements, shadow and non-shadow anchor pixels can be calculated based on the histograms of shadow and non-shadow pixel luminance values.

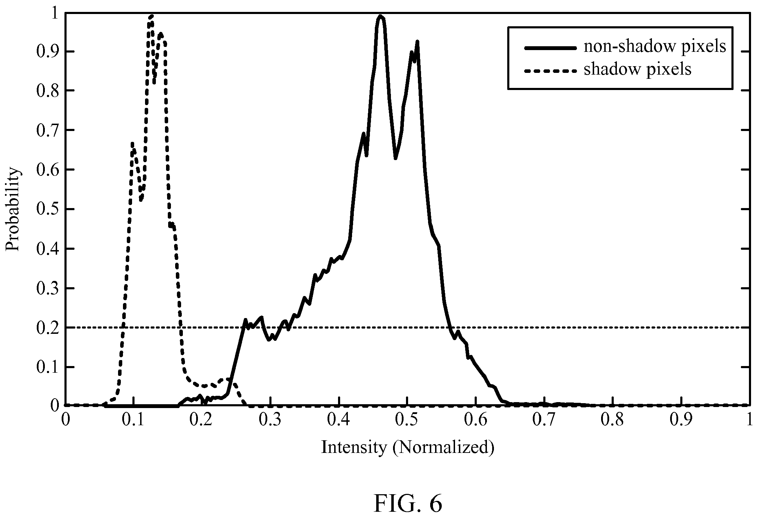

In particular, shadow and non-shadow pixels can be selected for pixels in both the shadow and non-shadow regions that have a probability above a pre-defined threshold. Figure 6 is a histogram of the measured intensity of non-shadow and shadow pixels. In some implementations, pixels having a normalized intensity corresponding to a probability below 0.2 can be discarded, such that shadow and non-shadow anchor pixels can include only those pixels with probabilities greater than or equal to 0.2. The respective anchor pixels with intensities corresponding to probabilities greater than or equal to 0.2 can be used to calculate the luminance distribution explained below with respect to Figure 7. The resulting anchor pixels for both shadow and non-shadow regions can represent regions that originate from the same human skin regions.

Attenuation of Shadows

Figure 7 is a flowchart illustrating a method 70 for attenuating the identified shadows, according to some implementations. In general, the shadows may be attenuated by shifting the luminance distribution of pixels in the detected shadow regions of the image towards that of the non-shadow regions, *e.g.,* to make the shadow regions appear lighter in the attenuated image. In some embodiments the system preserves non-shadow and non-skin regions in the captured image while making the detected shadow region(s) appear lighter (*e.g.*, attenuating the shadow), and while also preserving human skin texture in the shadow regions of the image. Further, embodiments preserve a natural visual perception of human skin, such that the human skin does not appear artificial or otherwise modified.

To attenuate detected shadows, luminance histograms may be calculated for both shadow and non-shadow pixels. The cumulative distribution functions (CDF) may be calculated for the histograms of the shadow and non-shadow pixels, *e.g., $C_{shadow}$* and *$C_{non-shadow}$,* respectively. The pixels in shadow and non-shadow regions can be matched such that the luma components in the YCbCr space of each pixel *i* in shadow and non-shadow can be correlated. For example, in some implementations, the CDFs of the shadow and non-shadow pixels can be matched such that, for the luma component $Y_i$ of each pixel *i,* a corresponding luma component $Y_i'$ can be identified such that

$$C_{shadow}\left(Y_i\right) = C_{non-shadow}\left(Y_i'\right),$$

where $Y_i$ corresponds to the luminance in the shadow regions and $Y_i'$ corresponds to the luminance in the non-shadow regions. Thus, the luminance shift can be estimated as

$$\Delta = Y' - Y .$$

The method 70 begins in a block 71 to generate a weight map *W* of pixel luminance shifts. The weight map *W* can be used to overcome pixel-wise error induced by the live-skin detection method 50 and/or the shadow detection method 60, and can indicate the amount of luminance shift for each pixel. The weight map *W* can therefore help to preserve the natural look of human skin. In some implementations, the weight map *W* can be calculated by

$$W = N\left(\frac{1}{1+e^{a(Y-pt_1)}} .* \frac{1}{1+e^{-a(Y-pt_2)}}\right) .* S ,$$

where

$$pt_1 = \mu_1 - \sigma_1,$$

and

$$pt_2 = \mu_1 - 3\sigma_1.$$

$\mu_1$ and $\sigma_1$ can indicate the mean and variance of the luminance value of shadow anchor pixels, in some arrangements. In the weight map $W$, larger weights may be assigned to skin shadow pixels, and smaller weights may be assigned to non-skin and/or non-shadow pixels.

The method 70 then moves to a decision block 72, in which a decision is made regarding whether or not a pixel-wise attenuation technique will be used to attenuate the detected shadows. If a decision is made not to employ the pixel-wise technique, then the method 70 continues to a decision block 74 to attenuate the shadows in a block-wise technique, as explained in more detail below. If a decision is made to use the pixel-wise technique, then the method 70 moves to a block 73 to adjust the luminance of each pixel on a pixel-by-pixel basis. In particular, the luminance of each pixel can be adjusted by

$$Y' = Y + W.*\Delta.$$

Thus, the detected shadows in the live-skin portions can be attenuated by adjusting the original luminance $Y$ by a weighted amount $\Delta$ to lighten the shadow regions and improve image quality.

In some cases, the shadow boundary may be abrupt or choppy. To soften and/or smooth the shadow boundary, and to improve the natural look of the imaged skin, a directional smoothing technique may be applied. For example, in some arrangements, the shadow penumbra map $B$ can be defined as

$$B(i,j) = \begin{cases} 1 & if & \|\nabla Y'(i,j)\| < \tau \\ 0 & otherwise \end{cases}$$

$$p(i,j) \subseteq penumbra \cap binary\_skin\_map,$$

where $\tau$ is a pre-defined threshold. As $\|\nabla Y'(i,j)\|$ represents the magnitude of the gradient at pixel $p(i,j)$ of luminance image $Y'$, it should be appreciated that the shadow penumbra map $B$ can represent regions of the image where the image gradient is relatively small, *e.g.,* where the shadow boundaries are relatively smooth. Further, the $Y$ value can be smoothed across the actual penumbra region such that each pixel in the shadow penumbra map $B$ can be smoothed locally in a direction tangent to the shadow edge. The texture of the shadow boundary can thereby be preserved.

The method 70 then moves to a decision block 74 to determine whether a block-wise attenuation technique is to be performed on the detected shadows. If the answer is no, then the method 70 ends. If a decision is made that the block-wise attenuation techniques is to be performed, then the method 70 moves to a block 75 to adjust the luminance values of one or more blocks of pixels. The block-wise techniques of block 75 can be employed in various situations, such as those in which the entire face or live-skin region is in a shadow region. Because large portions of the face may be obscured by shadow, the pixel-wise attenuation technique may not fully capture skin texture differences in shadow portions of the skin. To preserve the natural look of human skin, the block-wise approach may be used. For example, the image may be divided into one or more blocks, and a contrast limit function may be applied on the histogram of each block independently. The contrast limit function may be a fixed exponential function having a parameter to control the rate. Histograms of neighboring blocks may be averaged, and the luma of each pixel may be tone mapped using four neighboring histograms. A weight may be assigned to each block. For example, the assigned weight may be calculated from the weight map $W$, described above. The weight can be mapped to the rate of the contrast limit function. In some arrangements, the weights of all the pixels in a block can be averaged. The mapping function may be determined by

$$f(w) = \frac{e^w - 1}{e - 1} * a + b,$$

where $a$ and $b$ are pre-determined parameters (*e.g.,* $a$=4, $b$=1 in some arrangements). The blocks having larger weights may have more shadow, such that more contrast enhancement can be applied. Similarly, blocks having smaller weights may have less shadow, such that less contrast enhancement can be applied.

The method 70 then moves to a block 76 to blend pixel- and block-wise attenuations in cases where both types of attenuation are employed. For example, alpha blending can be used to incorporate the advantages of both types of shadow attenuation techniques. In particular, the attenuated image $Y'$ can be calculated by

$$Y' = \alpha Y'_{pixel-wise} + (1 - \alpha) Y'_{block-wise},$$

where $\alpha$ varies from 0 to 1. The value of $\alpha$ may be determined by the user or adaptively by the system. In some arrangements $\alpha$ can be about 0.75 for cast shadow cases and about 0.25 for non-cast shadow cases. Further, the chroma components $C_b$ and $C_r$ can be adjusted by

$$C'_b = W. * \frac{Y'.}{Y} + (1 - W)C_b,$$

and

$$C'_r = W. * \frac{Y'.}{Y} + (1 - W)C_r.$$

The attenuated image can therefore include attenuated luma and chrominance components. The resulting improvement in image quality can reduce the dark portions that obscure live-skin portions in captured images. Once the image has been attenuate, the method 70 ends.

Examples of Shadow Attenuation

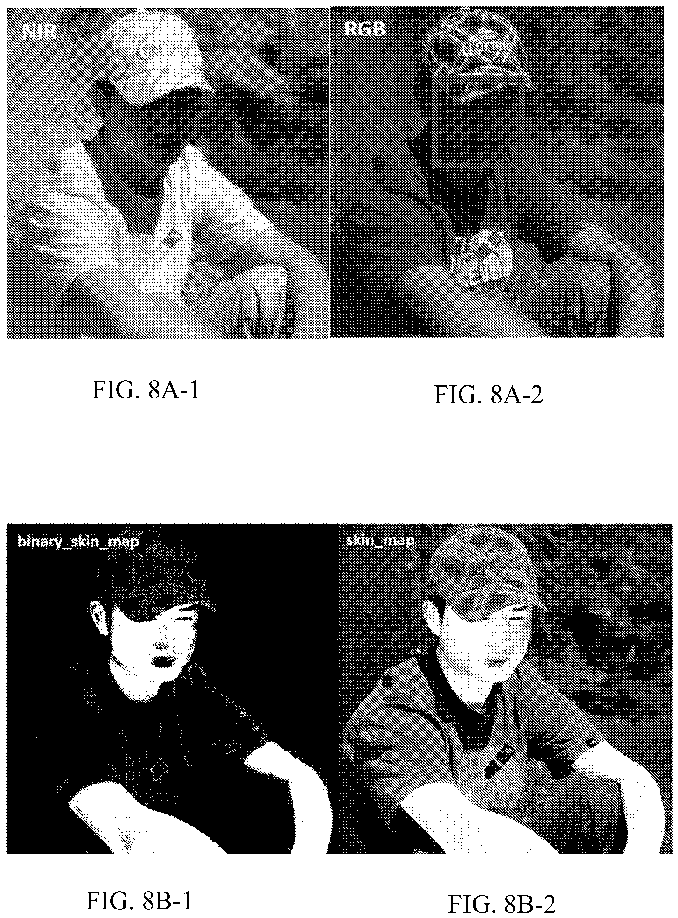

Figures 8A-1 through 8E are example images at different stages of a shadow attenuation method, according to one implementation. For example, Figures 8A-1 and 8A-2 are example NIR and visible light images, respectively, that were captured using a NIR sensor and a separate visible light sensor. Although the visible light image of Figure 8A-2 is illustrated as a black and white photograph in the drawings, it should be appreciated that the original image was captured as a color RGB image. As shown in both Figures 8A-1 and 8A-2, the live subject was imaged outside in daylight. The hat on the subject cast a substantial shadow over the subject's face such that details of the face are obscured by the cast shadow.

Figure 8B-1 illustrates the binary skin map that was calculated according to block 41 of Figure 4, explained in detail above. The binary skin map can represent live- and non-live skin pixels of the subject. As shown in Figure 8B-1, the method 40 accurately located the live-skin portions in the image, such as the subject's face and exposed arms. Figure 8B-2 illustrates the skin map $S$ that was calculated according to block 43 of Figure 4. The disclosed smoothing functions were successful in smoothing the skin boundaries between live-skin and non-live skin pixels from the binary skin map.

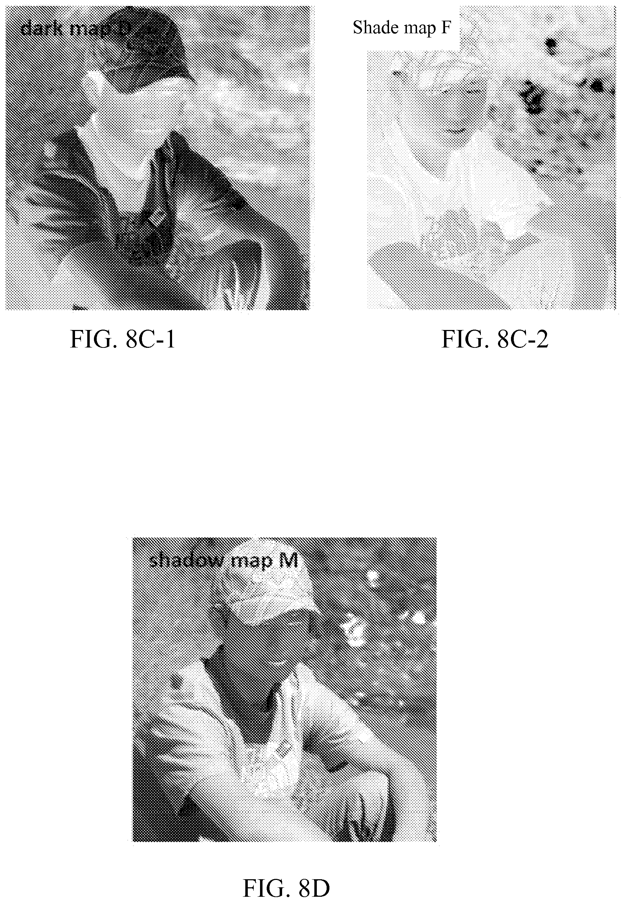

Figure 8C-1 illustrates the dark map $D$ that was generated according to block 51 of Figure 1, explained above. As shown in Figure 8C-1, large values in the dark map $D$ can represent generally dark objects, corresponding to either shadow regions or merely dark objects. Thus, regions in Figure 8C-1 that are lighter (representing higher pixel values) can correspond to darker regions in the original visible and NIR images. For example, the regions in the subject's face have high pixel values, which correspond to shadow regions. In addition, in the dark map $D$, dark objects such as the subject's hair and eyebrows also have high pixel values.

Turning to Figure 8C-2, the shade map $F$ outlines shadow regions within the live-skin portions. For example, in Figure 8C-2, large pixel values in the skin portions represent shadow, live-skin portions, while small pixel values (e.g., darker regions) represent either non-shadow portions or dark object portions of the image. For example, in the shade map $F$, the face (which is occluded by shadow) is at a higher pixel value, while the eyebrows, hair, and eyes are at lower pixel values. Thus, the shadow regions within the live-skin portions are generally outlined by non-shadow portions, such as the eyebrows, hair, eyes, etc. The shade map $F$ is thereby able to distinguish shadow from non-shadow regions in the live-skin portions.

In Figure 8D, the shadow map $M$ is shown for an example image. In the shadow map $M$, small values within the skin portions (e.g., darker regions) represent regions that have a high probability of being a shadow pixel. As shown in Figure 8D, for example, the subject's lips, hair, eyebrows, and eyes have higher pixel values (corresponding to non-shadow, dark regions), while the skin on the subject's face, occluded by the subject's hat, have lower pixel values, which correspond to shadow regions on the subject's face.

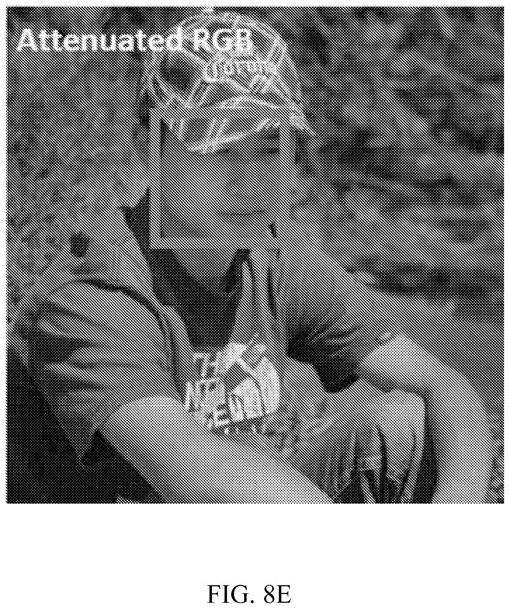

Figure 8E illustrates an example image in which the shadows cast over the subject's face have been detected and substantially attenuated. In particular, Figure 8E is a visible light image in which the shadow cast over the subject's face has been reduced. Facial features, such as lines that define the subject's nose, mouth, cheek, etc., can be seen, whereas in Figure 8A-2, the same facial features are largely obscured by the dark, shadow region. As explained above with respect to Figure 7, for example, the systems and methods disclosed herein can utilize the unique reflectance properties of human skin when illuminated by NIR light to detect and attenuate shadows on human skin. It should be appreciated that the image shown in Figure 8E may be rendered as a black and white image; however, the original visible light image was captured using a RGB visible light sensor. The illustrated black and white image is presented only for convenience of illustration.

Clarifications Regarding Terminology

Those having skill in the art will further appreciate that the various illustrative logical blocks, modules, circuits, and process steps described in connection with the implementations disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. One skilled in the art will recognize that a portion, or a part, may comprise something less than, or equal to, a whole. For example, a portion of a collection of pixels may refer to a sub-collection of those pixels.

The various illustrative logical blocks, modules, and circuits described in connection with the implementations disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or process described in connection with the implementations disclosed herein may be embodied directly in hardware, in a software module executed by a processor, or in a combination of the two. Each module can include various sub-routines, procedures, definitional statements and macros. Each of the modules may be separately compiled and linked into a single executable program. The description of each of the modules herein is used for convenience to describe the functionality of the system. Processes that are undergone by each of the modules may be arbitrarily redistributed to one of the other modules, combined together in a single module, or made available in, for example, a shareable dynamic link library. A software module may reside in RAM memory, flash memory, ROM memory, EPROM memory, EEPROM memory, registers, hard disk, a removable disk, a CD-ROM, or any other form of non-transitory storage medium known in the art. An exemplary computer-readable storage medium is coupled to the processor such the processor can read information from, and write information to, the computer-readable storage medium. In the alternative, the storage medium may be integral to the processor. The processor and the storage medium may reside in an ASIC. The ASIC may reside in a user terminal, camera, or other device. In the alternative, the processor and the storage medium may reside as discrete components in a user terminal, camera, or other device.

Headings are included herein for reference and to aid in locating various sections. These headings are not intended to limit the scope of the concepts described with respect thereto. Such concepts may have applicability throughout the entire specification.

The previous description of the disclosed implementations is provided to enable any person skilled in the art to make or use the present invention. Various modifications to these implementations will be readily apparent to those skilled in the art, and the generic principles defined herein may be applied to other implementations without departing from the claims. Thus, the present invention is not intended to be limited to the implementations shown herein but is to be accorded the widest scope consistent with the principles and novel features disclosed herein.

**Claims**

1.    A computer-implemented method for attenuating shadows in an image, comprising:

processing multispectral image data that includes a living subject, the multispectral image data comprising visible light image data and near infrared, NIR, image data;

detecting live-skin portions of the multispectral image data based at least in part on reflectance properties of human skin when illuminated by light at NIR wavelengths;

identifying shadows in the detected live-skin portions of the multispectral image data by calculating a ratio of visible to NIR light for corresponding pixels in the visible and NIR images; and

attenuating the identified shadows in the detected live-skin portions of the visible light image data.

2. The method of Claim 1, wherein attenuating the identified shadows comprises calculating a luminance distribution in the NIR and visible light image data.

3. The method of Claim 1, further comprising detecting a human face in the visible light and NIR image data, and wherein the detected human face comprises at least some of the detected live-skin portions.

4. The method of Claim 1, further comprising capturing the multispectral image data with a multispectral imaging system.

5. The method of Claim 4, wherein capturing the multispectral image data comprises capturing visible light image data and near infrared, NIR, image data.

6. The method of Claim 5, wherein capturing visible light image data and NIR image data comprises:

capturing a visible light image of the living subject with a visible light sensor; and
capturing a NIR image of the living subject with a NIR sensor.

7. An imaging system, comprising:

means for processing multispectral image data that includes a living subject, the multispectral image data comprising visible light image data and near infrared, NIR, image data;
means for detecting live-skin portions of the multispectral image data based at least in part on reflectance properties of human skin when illuminated by light at NIR wavelengths;
means for identifying shadows in the detected live-skin portions of the multispectral image data by calculating a ratio of visible to NIR light for corresponding pixels in the visible and NIR images; and
means for attenuating the identified shadows in the detected live-skin portions of the visible light data.

8. The imaging system of Claim 7, further comprising means for capturing multispectral image data that includes a living subject.

9. The imaging system of Claim 8, wherein the capturing means comprises a visible light sensor and a near infrared, NIR, sensor.

10. The imaging system of Claim 7, wherein the processing means comprises a live-subject verification module programmed to process the multispectral image data.

11. The imaging system of Claim 7, wherein the shadow-identifying means comprises a shadow identification module programmed to identify the shadows.

12. The imaging system of Claim 7, wherein the shadow-attenuating means comprises a shadow attenuation module programmed to attenuate the identified shadows.

13. A non-transitory computer-readable medium having stored thereon code that when executed carries out the method of any of claims 1 to 6.

**Patentansprüche**

1. Computerimplementiertes Verfahren zum Abschwächen von Schatten in einem Bild, das Folgendes beinhaltet:

Verarbeiten von multispektralen Bilddaten, die ein lebendes Subjekt beinhalten, wobei die multispektralen Bilddaten Sichtbares-Licht-Bilddaten und NIR-(Nah-Infrarot)-Bilddaten umfassen;

Erkennen von Lebendhautteilen der multispektralen Bilddaten wenigstens auf der Basis von Reflexionseigenschaften von menschlicher Haut, wenn sie mit Licht mit NIR-Wellenlängen beleuchtet wird;

Identifizieren von Schatten in den erkannten Lebendhautteilen der multispektralen Bilddaten durch Berechnen eines Verhältnisses von sichtbarem Licht zu NIR-Licht für entsprechende Pixel in den sichtbaren und den NIR-Bildern; und

Abschwächen der identifizierten Schatten in den erkannten Lebendhautteilen der Sichtbares-Licht-Bilddaten.

2. Verfahren nach Anspruch 1, wobei das Abschwächen der identifizierten Schatten das Berechnen einer Luminanzverteilung in den NIR- und Sichtbares-Licht-Bilddaten beinhaltet.

3. Verfahren nach Anspruch 1, das ferner das Erkennen eines menschlichen Gesichts in den Sichtbares-Licht- und NIR-Bilddaten beinhaltet, und wobei das erkannte menschliche Gesicht wenigstens einige der erkannten Lebendhautteile umfasst.

4. Verfahren nach Anspruch 1, das ferner das Erfassen der multispektralen Bilddaten mit einem multispektralen Bildgebungssystem beinhaltet.

5. Verfahren nach Anspruch 4, wobei das Erfassen der multispektralen Bilddaten das Erfassen von Sichtbares-Licht-Bilddaten und NIR-(Nah-Infrarot)-Bilddaten beinhaltet.

6. Verfahren nach Anspruch 5, wobei das Erfassen von Sichtbares-Licht-Bilddaten und NIR-Bilddaten Folgendes beinhaltet:

Erfassen eines Sichtbares-Licht-Bildes des lebenden Subjekts mit einem Sichtbares-Licht-Sensor; und
Erfassen eines NIR-Bildes des lebenden Subjekts mit einem NIR-Sensor.

7. Bildgebungssystem, das Folgendes umfasst:

Mittel zum Verarbeiten von multispektralen Bilddaten, die ein lebendes Subjekt beinhalten, wobei die multispektralen Bilddaten Sichtbares-Licht-Bilddaten und NIR-(Nah-Infrarot)-Bilddaten umfassen;
Mittel zum Erkennen von Lebendhautteilen der multispektralen Bilddaten wenigstens teilweise auf der Basis von Reflexionseigenschaften von menschlicher Haut, wenn sie mit Licht mit NIR-Wellenlängen beleuchtet wird;
Mittel zum Identifizieren von Schatten in den erkannten Lebendhautteilen der multispektralen Bilddaten durch Berechnen eines Verhältnisses von sichtbarem zu NIR-Licht für entsprechende Pixel in den sichtbaren und NIR-Bildern; und
Mittel zum Abschwächen der identifizierten Schatten in den erkannten Lebendhautteilen der Sichtbares-Licht-Bilddaten.

8. Bildgebungssystem nach Anspruch 7, das ferner Mittel zum Erfassen von multispektralen Bilddaten umfasst, die ein lebendes Subjekt beinhalten.

9. Bildgebungssystem nach Anspruch 8, wobei die Erfassungsmittel einen Sichtbares-Licht-Sensor und einen NIR-(Nah-Infrarot)-Sensor umfassen.

10. Bildgebungssystem nach Anspruch 7, wobei das Verarbeitungsmittel ein Lebendsubjekt-Verifizierungsmodul umfasst, programmiert zum Verarbeiten der multispektralen Bilddaten.

11. Bildgebungssystem nach Anspruch 7, wobei das Schattenidentifizierungsmittel ein zum Identifizieren der Schatten programmiertes Schattenidentifikationsmodul umfasst.

12. Bildgebungssystem nach Anspruch 7, wobei das Schattenabschwächungsmittel ein zum Dämpfen der identifizierten Schatten programmiertes Schattenabschwächungsmodul umfasst.

13. Nichtflüchtiges computerlesbares Medium, auf dem Code gespeichert ist, der bei Ausführung das Verfahren nach einem der Ansprüche 1 bis 6 durchführt.

**Revendications**

1. Procédé d'atténuation des ombres dans une image mis en oeuvre par ordinateur, comprenant

le traitement de données d'image multispectrale qui comportent un sujet vivant, les données d'image multispectrale comprenant des données d'image en lumière visible et des données d'image dans l'infrarouge proche, NIR ;
la détection de parties de peau vivante des données d'image multispectrale en fonction au moins en partie de propriétés de réflectance de la peau humaine quand elle est éclairée par une lumière à des longueurs d'onde NIR ;
l'identification d'ombres dans les parties de peau vivante détectées des données d'image multispectrale en calculant un rapport lumière visible/lumière NIR de pixels correspondants dans les images visible et NIR ; et
l'atténuation des ombres identifiées dans les parties de peau vivante détectées des données d'image en lumière visible.

2. Procédé selon la revendication 1, dans lequel l'atténuation des ombres identifiées comprend le calcul d'une distribution de luminance dans les données d'image NIR et en lumière visible.

3. Procédé selon la revendication 1, comprenant en outre la détection d'un visage humain dans les données d'image en lumière visible et NIR, et dans lequel le visage humain détecté comprend au moins certaines des parties de peau vivante détectées.

4. Procédé selon la revendication 1, comprenant en outre la capture des données d'image multispectrale avec un système d'imagerie multispectrale.

5. Procédé selon la revendication 4, dans lequel la capture des données d'image multispectrale comprend la capture de données d'image en lumière visible et de données d'image dans l'infrarouge proche, NIR.

6. Procédé selon la revendication 5, dans lequel la capture de données d'image en lumière visible et de données d'image NIR comprend :

la capture d'une image en lumière visible du sujet vivant avec un capteur de lumière visible ; et
la capture d'une image NIR du sujet vivant avec un capteur NIR.

7. Système d'imagerie, comprenant :

un moyen de traitement de données d'image multispectrale qui comportent un sujet vivant, les données d'image multispectrale comprenant des données d'image en lumière visible et des données d'image dans l'infrarouge proche, NIR ;
un moyen de détection de parties de peau vivante des données d'image multispectrale en fonction au moins en partie de propriétés de réflectance de la peau humaine quand elle est éclairée par une lumière à des longueurs d'onde NIR ;
un moyen d'identification d'ombres dans les parties de peau vivante détectées des données d'image multispectrale en calculant un rapport lumière visible/lumière NIR de pixels correspondants dans les images visible et NIR ; et
un moyen d'atténuation des ombres identifiées dans les parties de peau vivante détectées des données en lumière visible.

8. Système d'imagerie selon la revendication 7, comprenant en outre un moyen de capture de données d'image multispectrale qui comportent un sujet vivant.

9. Système d'imagerie selon la revendication 8, dans lequel le moyen de capture comprend un capteur en lumière visible et un capteur dans l'infrarouge proche, NIR.

10. Système d'imagerie selon la revendication 7, dans lequel le moyen de traitement comprend un module de vérification de sujet vivant programmé pour traiter les données d'image multispectrale.

11. Système d'imagerie selon la revendication 7, dans lequel le moyen d'identification d'ombres comprend un module d'identification d'ombres programmé pour identifier les ombres.

12. Système d'imagerie selon la revendication 7, dans lequel le moyen d'atténuation d'ombres comprend un module d'atténuation d'ombres programmé pour atténuer les ombres identifiées.

13. Support non transitoire lisible par ordinateur sur lequel est mémorisé un code qui, à son exécution, met en oeuvre le procédé selon l'une quelconque des revendications 1 à 6.

FIG. 1A

FIG. 1B

FIG. 2

30

START

31

Capture visible and NIR
images of living subject

40

Detect live-subject portions
of the visible and NIR images

50

Identify shadows in detected
live-subject portions

70

Attenuate shadows

32

YES — Additional
images?

NO

END

FIG. 3

40

START

41

Calculate binary skin map

43

Smooth skin boundary

45

YES — Additional images?

NO

END

FIG. 4

50

START

↓

Calculate global dark map to
identify shadow candidates  ⌐51

↓

Calculate shade image based
on skin reflectance in NIR and
visible images  ⌐52

↓

Combine global dark map
and shade image to derive
shadow map M  ⌐53

↓

M(i, j) ≤ θ ?  ⌐54

NO →

YES ↓

Identify as shadow
pixel  55

Identify as non-shadow
pixel  ⌐56

↓

END ←

FIG. 5

FIG. 6

START

71
Generate weight map of
pixel luminance shift

72
NO ← Pixel-wise
attenuation?

YES

73
Adjust luminance
of each pixel

74
NO ← Block-wise
attenuation?

YES

75
Adjust luminance
of blocks

76
Blend pixel- and
block-wise attenuations

END

70

FIG. 7

FIG. 8A-1

FIG. 8A-2

FIG. 8B-1

FIG. 8B-2

FIG. 8C-1

FIG. 8C-2

FIG. 8D

FIG. 8E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6954549 B2
- US 66389712 A
- US 53370612 A